(19)

Europäisches
Patentamt

European
Patent Office

Office européen
des brevets

(11)  **EP 2 218 135 B1**

(12)  **FASCICULE DE BREVET EUROPEEN**

(45) Date de publication et mention
de la délivrance du brevet:
**11.07.2012  Bulletin 2012/28**

(21) Numéro de dépôt: **08847663.5**

(22) Date de dépôt: **05.11.2008**

(51) Int Cl.:
*H01Q 1/36* (2006.01)          *H01Q 5/00* (2006.01)
*H01Q 7/00* (2006.01)          *H01Q 1/22* (2006.01)
*G06K 19/077* (2006.01)

(86) Numéro de dépôt international:
**PCT/EP2008/064993**

(87) Numéro de publication internationale:
**WO 2009/059997 (14.05.2009 Gazette 2009/20)**

(54) **ANTENNE INDUCTIVE LARGE BANDE POUR SYSTEMES DE COMMUNICATION SANS CONTACT**

INDUKTIVE BREITBANDANTENNE FÜR KONTAKTLOSE KOMMUNIKATIONSSYSTEME

WIDEBAND INDUCTIVE ANTENNA FOR CONTACTLESS COMMUNICATION SYSTEMS

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité:  **05.11.2007  FR 0758794**

(43) Date de publication de la demande:
**18.08.2010  Bulletin 2010/33**

(73) Titulaire: **Commissariat à l'Énergie Atomique
et aux Énergies Alternatives
75015 Paris (FR)**

(72) Inventeurs:
 • **SALA SABATE, Judit
 E-08023 Barcelone (ES)**

 • **THOMAS, Thierry
 F-38760 Varces Allieres Et Risset (FR)**

(74) Mandataire: **Ilgart, Jean-Christophe et al
BREVALEX
95 rue d'Amsterdam
75378 Paris Cedex 8 (FR)**

(56) Documents cités:
**EP-A- 1 976 171          FR-A- 2 826 784
JP-A- 62 061 430          US-A- 4 739 269
US-A- 5 198 826           US-A- 5 691 731
US-A1- 2005 179 604       US-A1- 2005 212 707**

**Description**

**DOMAINE TECHNIQUE**

Le domaine auquel se rapporte l'invention est celui des antennes, notamment dans les systèmes de transmission de données par couplage inductif, éventuellement dans les dispositifs susceptibles d'assurer une télé-alimentation.

L'invention prévoit la mise en oeuvre de nouvelles structures d'antennes inductives, en particulier dans les systèmes communicants sans contact effectuant des échanges d'informations entre une station fixe (lecteur, interrogateur, coupleur, PCD) et un objet mobile (transpondeur, étiquette, carte, PICC), placé(e) dans le champ électromagnétique émis par la station fixe.

L'invention s'applique par exemple aux systèmes d'identification par radiofréquences RFID (RFID pour « Radio Frequency Identification), aux dispositifs suivant la norme ISO 14443, dans lesquels des échanges sans contact entre un élément PICC (PICC pour « Proximity Integrated Circuit Card ») et un élément PCD (PCD pour « Proximity Coupling Device ») sont effectués, aux dispositifs NFC selon la norme 18892.

Le dispositif d'antenne selon l'invention peut être prévu pour des stations fixes tels que les lecteurs de cartes, et permettre d'obtenir des débits importants de transmission de données en émission ou/et en réception, et éventuellement d'assurer une fonction optimale de télé-alimentation.

**ART ANTERIEUR**

Les systèmes de communication suivant la norme 14443 utilisent généralement une fréquence centrale de l'ordre de 13,56 MHz, avec une longueur d'onde de l'ordre de 22 mètres très supérieure aux dimensions du système de communication. Dans ces systèmes, les dimensions des antennes et la distance entre la station fixe, par exemple un lecteur et un objet mobile, par exemple une carte, n'excèdent généralement pas plusieurs décimètres. Les communications sont établies par l'intermédiaire d'une liaison sans fil entre deux enroulements, une antenne de lecteur, et une antenne de carte, par couplage de type inductif. Les paramètres principaux des antennes du système de communication sont les inductances des enroulements, les mutuelles inductances ou coefficients de couplage entre enroulements, le facteur de qualité des enroulements. L'antenne du lecteur sous forme d'un enroulement, est connectée à un générateur de signal prévu pour fournir un courant dans l'enroulement, afin de produire un champ magnétique variable à une fréquence centrale donnée par exemple de 13.56 MHz, dans l'espace environnant cette antenne. Lorsque la carte est placée au voisinage du lecteur, l'antenne de la carte est soumise à un champ variable, qui génère une force électromotrice (f.e.m) au sein de l'enroulement d'antenne de la carte. Un montage dit « en résonance parallèle » par la connexion d'une capacité aux bornes de l'enroulement permet de générer une tension plus importante, Q x f.e.m, aux bornes de l'enroulement, avec Q un facteur de surtension. Cette tension peut permettre d'alimenter un circuit électronique spécifique, par exemple une puce électronique, connectée aux bornes de l'enroulement d'antenne de la carte. On qualifie ce type d'alimentation sans contact ou sans fil ou encore de « télé-alimentation ». Par modulation du signal appliqué à l'enroulement d'antenne du lecteur, il est également possible de transmettre des informations à la puce électronique de la carte. Le fait que l'enroulement d'antenne de la carte soit connecté à une capacité et à un circuit électronique, conduit à une circulation de courant au sein de cet enroulement. Ce courant circulant dans l'enroulement de la carte produit un second champ s'ajoutant au premier dans l'espace environnant le système, et produit une seconde force électromotrice au sein de l'enroulement d'antenne du lecteur. Cet effet étant proportionnel au courant circulant dans l'enroulement d'antenne du lecteur, la force électromotrice produite par la carte sur l'enroulement d'antenne du lecteur peut être assimilée à une impédance, dite impédance ramenée par couplage. La variation des paramètres d'impédance de la puce électronique connectée à l'enroulement d'antenne de la carte conduit à une variation de cette impédance ramenée dans l'enroulement d'antenne du lecteur. Il est alors possible à la carte, par ce moyen communément appelé " modulation de charge ", de transmettre des informations au lecteur. On peut réaliser ainsi une transmission de données entre le lecteur et la carte.

Les organes de couplage entre la carte et le lecteur sont des enroulements ou bobines d'éléments conducteurs. Ces éléments conducteurs peuvent être sous différentes formes, par exemple des fils de section circulaire ou des pistes d'un circuit imprimé par exemple. De manière générale, ces enroulements sont appelés antennes ou antennes inductives. La bande passante du lecteur est principalement définie par le facteur de qualité d'un résonateur, avec une largeur de bande proportionnelle à la résistance de perte série. La capacité à produire un champ est directement liée au courant circulant dans l'enroulement d'antenne. Le courant sera d'autant plus faible, à tension de source constante que la résistance série sera importante. Les antennes du lecteur peuvent être formées d'un circuit conducteur réalisé sur circuit imprimé, dont la géométrie peut être par exemple de forme rectangulaire, circulaire ou elliptique, et d'une taille qui peut aller de plusieurs centimètres à plusieurs décimètres. Par géométrie de l'antenne on entend le dessin ou le motif formé par un enroulement, ou par des pistes métallique formant l'antenne.

Le document US-A-5691731 décrit un interrogateur RFID équipé d'une antenne de type fente comprenant une boucle interne et une boucle externe.

Les systèmes de cartes d'identification sans contact par radiofréquence actuels mettent généralement en oeuvre un faible débit de transmission de données, dans la mesure où les applications actuelles, tels que l'échange de données de date, d' horaire, d'un numéro d'identification, un code à barres, ne nécessitent pas des transferts volumineux.

Avec l'apparition de nouvelles applications, par exemple l'échange de données biométriques pour les passeports, des transmissions de volumes de données plus importants sont prévues. Des amendements à la norme 14443 ont été ajoutés afin d'atteindre des débits qualifiés de " hauts débits " (212 kbps, 424 kbps et 847 kbps par exemple), tandis que des amendements sont prévus pour des débits qualifiés de " très hauts débits " (1.7 Mbps, 3.4 Mbps et 5.1 Mbps, 10.1 Mbps par exemple).

Pour obtenir de tels débits, une solution consiste à élargir la bande passante des antennes des lecteurs. La mise en oeuvre d'une modulation complexe par exemple à multi-niveaux d'amplitude ou/et multi-niveaux de phase peut, quant à elle, permettre d'augmenter le débit tout en limitant l'élargissement nécessaire de la bande passante. Il n'en reste pas moins qu'avec une telle modulation, il se pose le problème d'obtenir un bon rapport signal à bruit de la liaison lecteur-carte.

L'augmentation de l'amortissement de l'antenne lecteur aboutit à une augmentation importante de la puissance nécessaire pour un niveau de champ produit identique. L'augmentation de l'amortissement conduit également à une réduction de la sensibilité à la rétro-modulation ou modulation de charge de la carte.

Il se pose le problème de trouver une nouvelle structure d'antenne inductive, en particulier pour un lecteur d'un système de communication qui permet d'obtenir une bande suffisamment large pour des applications à très haut débit, sans dégrader l'efficacité de l'antenne, en particulier le rapport champ/puissance en émission et l'efficacité en réception.

## EXPOSÉ DE L'INVENTION

La présente invention prévoit la réalisation d'une structure d'antenne à large bande passante, adaptée à des échanges de données à haut débit ou très haut débit.

L'objet de l'invention est défini par la revendication 1 et des modes de réalisation avantageux sont précisés dans les revendications dépendantes.

## BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :

- les figures 1A, 1B, 1C illustrent un premier exemple d'agencement d'antenne(s) suivant l'invention,
- les figures 2A, 2B, illustrent des exemples de diagrammes de rayonnement du premier exemple antenne,
- les figures 3A, 3B, 3C, 3D, illustrent des exemples de variantes d'agencements d'antennes dans un dispositif émetteur et/ou récepteur de signaux sans contact suivant l'invention,
- la figure 4 illustre un autre exemple d'agencement d'antenne dans un dispositif émetteur et/ou récepteur de signaux sans contact suivant l'invention,
- les figures 5A et 5B illustrent respectivement un premier circuit conducteur et un deuxième circuit conducteur formant une antenne telle qu'illustrée sur la figure 4,
- les figures 6A, 6B, 6C illustrent respectivement un premier circuit conducteur et un deuxième circuit conducteur, et une antenne formée par ces deux circuits, les circuits étant dotés de composants passifs supplémentaires,
- les figures 7A, 7B, illustrent des exemples de distributions de champ magnétique obtenues à l'aide d'un exemple d'antenne suivant l'invention,
- les figures 8A, 8B, illustrent des exemples de distributions de champ magnétique obtenues à l'aide d'un autre exemple d'antenne suivant l'invention,
- les figures 9, et 10, illustrent respectivement un schéma électrique équivalent d'un exemple d'antenne suivant l'invention, et des courbes de réponses en courant en fonction de la fréquence pour une telle antenne,
- les figures 11, et 12, illustrent respectivement un schéma électrique équivalent d'une boucle résonante standard, et des courbes de réponses en fonction de la fréquence pour une telle boucle,
- les figures 13, et 14, illustrent respectivement un exemple de schéma électrique équivalent d'un exemple d'antenne suivant l'invention formée de 2 boucles résonantes, et des courbes de réponses en fonction de la fréquence pour de telles boucles,
- les figures 15, 16A, 16B, illustrent un exemple d'antenne suivant l'invention à 3 boucles résonantes.
- la figure 17 illustre un exemple de schéma électrique équivalent d'un dispositif d'émission de signaux comprenant au moins un exemple de structure d'antenne suivant l'invention à 2 circuits résonants, dont un premier circuit couplé à un premier générateur et un deuxième circuit connecté à un deuxième générateur,

- la figure 18 illustre un autre exemple de schéma électrique équivalent d'un exemple de dispositif d'émission de signaux comprenant au moins une structure d'antenne suivant l'invention à deux circuits résonants, dont un premier circuit couplé à un premier générateur et un deuxième circuit couplé à un deuxième générateur,
- la figure 19 illustre un autre exemple de schéma électrique équivalent d'un exemple de dispositif d'émission de signaux comprenant au moins une structure d'antenne suivant l'invention à deux circuits résonants couplés à un même générateur,
- la figure 20 illustre un autre exemple de schéma électrique équivalent d'un exemple de dispositif d'émission de signaux comprenant au moins une structure d'antenne suivant l'invention à deux circuits résonants connectés à un même générateur,
- la figure 21 illustre un exemple de schéma électrique équivalent d'un exemple de dispositif d'émission et de réception de signaux comprenant au moins une structure d'antenne suivant l'invention à 2 circuits résonants, dont un premier circuit dédié à une émission de signaux et couplé à un premier générateur et un deuxième circuit dédié à une réception de signaux et couplé à un étage ou circuit de réception,
- la figure 22 illustre un exemple de schéma électrique équivalent d'un exemple de dispositif d'émission et de réception de signaux comprenant au moins une structure d'antenne suivant l'invention à 3 circuits résonants, connectés chacun à un générateur par l'intermédiaire d'un bloc de raccordement,
- la figure 23 illustre un exemple de schéma électrique équivalent d'un exemple de dispositif d'émission et de réception de signaux comprenant au moins une structure d'antenne suivant l'invention à 3 circuits résonants, connectés à un même générateur par l'intermédiaire d'un bloc de raccordement,
- la figure 24 illustre un exemple de mise en oeuvre du bloc de raccordement du dispositif de la figure 23,
- la figure 25 illustre un exemple de schéma électrique équivalent d'un exemple de dispositif d'émission et de réception de signaux comprenant au moins une structure d'antenne suivant l'invention à 3 circuits résonants, deux circuits résonants étant connectés à un même générateur par l'intermédiaire d'un bloc de raccordement et un autre circuit résonant étant sont connecté à un étage de réception par l'intermédiaire dudit bloc de raccordement,

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

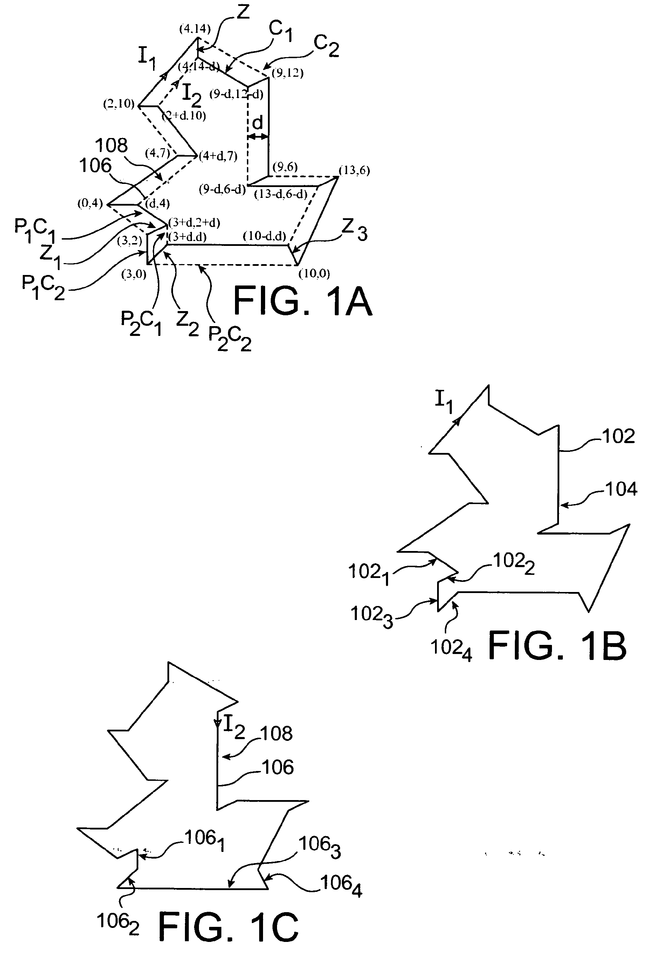

Un exemple de géométrie d'une structure d'antenne, formant une ou plusieurs antennes, d'un dispositif de transmission, adapté pour l'émission et/ou la réception, de signaux par couplage inductif sans contact suivant l'invention, va à présent être donné en liaison avec les figures 1A, 1B, 1C.

Le dispositif peut être intégré à un dispositif appelé station fixe, par exemple tel qu'un lecteur, un interrogateur, un coupleur, ou un PCD, destiné à lire des signaux émis par un objet mobile, par exemple telle qu'une carte, un transpondeur, une étiquette, ou un PICC.

Dans un exemple, la structure d'antenne comporte un ensemble de liens conducteurs, formant plusieurs circuits résonants, par exemple 2" circuits résonants.

Les éléments conducteurs sont répartis dans plusieurs plans, et agencés de sorte qu'une projection de l'ensemble des liens conducteurs dans un même plan forme au moins un premier contour fermé $C_1$ suivant une première forme, et au moins un deuxième contour fermé $C_2$ situé à l'intérieur du premier contour et suivant une deuxième forme, homothétique de ladite première forme, et d'une pluralité de liens conducteurs agencés de sorte que des segments Z dits « de transition » relient le premier contour $C_1$ et le deuxième contour $C_2$.

Dans cet exemple, une première pluralité de liens conducteurs (référencés 102 et représentés en traits pleins sur les figures 1A et 1B) de l'antenne sont situés dans un premier plan et forment un premier circuit 104 par lequel un premier courant $I_1$ est destiné à circuler, tandis qu'une deuxième pluralité de liens conducteurs (référencés 106 et représentés en traits discontinus sur la figure 1A et en traits pleins sur la figure 1B) sont situés dans un deuxième plan distinct du premier plan, et forment un deuxième circuit 108 par lequel un deuxième courant $I_2$ est destiné à circuler.

Le premier circuit 104 et le deuxième circuit 108 sont distincts, c'est-à-dire qu'ils ne sont pas reliés entre eux ni connectés entre eux. Ces deux circuits sont indépendants de sorte que le premier courant $I_1$ et le deuxième courant $I_2$ sont indépendants et peuvent être différents l'un de l'autre en fonction de l'utilisation qui est faite de la structure d'antenne.

Dans cet exemple, une projection, en particulier orthogonale, du premier circuit 104 et du deuxième circuit 108 dans un même plan, par exemple parallèle au premier plan et au deuxième plan, réalise un premier contour $C_1$ en forme de polygone, et un deuxième contour conducteur $C_2$ fermé ayant la forme d'un deuxième polygone, identique au premier polygone, et à l'intérieur duquel se trouve le premier polygone, le deuxième polygone étant ainsi une homothétie du premier polygone. Une superposition ou une projection du premier circuit 104 et du deuxième circuit 108 dans un même plan, forme également des segments Z de transition reliant chacun un sommet du premier polygone et un sommet du deuxième polygone. Lesdits segments Z de transition reliant le premier contour et le deuxième contour peuvent être situés sur des droites passant par un centre d'homothétie desdits contours.

Les segments Z reliant le premier contour et le deuxième contour, peuvent être formés chacun d'une superposition entre un lien conducteur du premier circuit et un autre lien conducteur du deuxième circuit.

Le premier circuit conducteur 104 comprend une succession de parties conductrices, chaque partie conductrice étant formée d'un premier lien conducteur $102_1$ dont la projection forme une portion $P_1C_1$ du premier contour C1, d'un deuxième lien conducteur $102_2$ relié au premier lien conducteur $102_1$ et dont la projection forme un segment de transition $Z_1$ entre le premier contour C1 et le deuxième contour C2, d'un troisième lien conducteur $102_3$ dont la projection forme une portion $P_1C_2$ du deuxième contour C2, et d'un quatrième lien $102_4$ dont la projection forme un segment de transition $Z_2$ entre le deuxième contour C2 et le premier contour C1 (figures 1A et 1B).

Le deuxième circuit conducteur 108 comprend également une succession de parties conductrices, chaque partie conductrice étant formée d'un premier lien conducteur $106_1$ dont la projection forme une portion $P_2C_1$ du premier contour C1, d'un deuxième lien conducteur $106_2$ relié au premier lien conducteur $106_1$ et dont la projection forme un segment de transition $Z_2$ entre le premier contour C1 et le deuxième contour C2, d'un troisième lien conducteur $106_3$ dont la projection forme une portion $P_2C_2$ du deuxième contour C2, et d'un quatrième lien conducteur $106_4$ dont la projection forme un segment de transition $Z_3$ entre le deuxième contour C2 et le premier contour C1 (figures 1A et 1C).

Le premier contour C1 peut être ainsi formé d'une succession de tronçons qui sont alternativement une projection d'un lien conducteur 102 appartenant au premier circuit 104 et une projection d'un lien conducteur 106 appartenant au deuxième circuit 108.

Le deuxième contour C2 peut être formé d'une succession de tronçons qui sont alternativement une projection d'un lien conducteur 106 appartenant au deuxième circuit 108 et par une projection d'un lien conducteur appartenant au premier circuit 108.

Les segments de transition Z1 et Z2 reliant le premier contour et le deuxième contour, correspondent dans cet exemple à une superposition d'une projection d'un lien conducteur du premier circuit et d'une projection d'un lien conducteur du deuxième circuit.

Un tel agencement des liens conducteurs des circuits 104 et 108 est prévu pour obtenir un coefficient de couplage entre le premier circuit 104 et le deuxième circuit 108 nul ou quasi-nul ou inférieur à 5 %, avantageusement inférieur à 1 %.

La conception d'une telle antenne peut être effectuée par exemple en choisissant tout d'abord la géométrie d'un premier contour de base $C_{01}$ que l'on prévoit en fonction d'une distribution spatiale du champ magnétique que l'on cherche à produire dans une zone utile à proximité de l'antenne.

Ensuite, un deuxième contour $C_{02}$ est établi par homothétie autour de la géométrie du premier contour $C_{01}$ de base. Des segments de transition passant de l'un à l'autre des contours $C_{01}$ et $C_{02}$ de base sont ensuite prévus. A partir des contours $C_{01}$ et $C_{02}$ de base, des modifications géométriques de circuits conducteurs, sont effectuées de manière à obtenir un bilan ou une somme des mutuelles inductances partielles nulle ou sensiblement nulle, correspondant à un couplage proche de 0, entre ces circuits, dont une projection dans un même plan forme lesdits contours $C_{01}$ et $C_{02}$.

Pour adapter l'agencement des circuits de manière à obtenir une inductance mutuelle nulle, on peut tenir compte du fait que des filaments traversés par un courant et placés parallèlement ont une inductance mutuelle d'autant plus importante que ces filaments sont proches, tandis que lorsque ces filaments sont placés perpendiculairement l'un à l'autre, l'inductance mutuelle est nulle.

Un calcul à l'aide de mutuelles inductances partielles entre des portions élémentaires $\vec{dl_1}$, $\vec{dl_2}$, des

circuits, à l'aide d'une détermination du potentiel vecteur magnétique $\vec{A}$ peut être mis en oeuvre.

Le potentiel vecteur magnétique $\overset{\leftrightarrow}{A}$ créé par un premier circuit de contour $X_1$ parcouru par un courant $I_1$ à un point M est :

$$\vec{A} = \frac{\mu_0}{4\pi} \cdot I_1 \cdot \oint_{x_1} \frac{\vec{dl_1}}{r}$$

Au voisinage du premier circuit, le sens du vecteur $\overleftrightarrow{A}$ est le même que celui de circulation du courant $I_1$.

Le flux $\phi_{12}$ à travers la surface occupée par le second circuit est égal à la circulation du vecteur $\overleftrightarrow{A}$ sur le contour $X_2$ du deuxième circuit :

$$\phi_{12} = \oint_{X_2} \vec{A} * d\vec{l}_2$$

En combinant les expressions, on obtient l'expression de la mutuelle inductance $M_{12}$ entre les deux circuits de contours respectifs X1 et X2 :

$$\phi_{12} = \frac{\mu_0 * I_1}{4 * \Pi} * \oint_{X_2} \oint_{X_1} \frac{d\vec{l}_1}{r} * d\vec{l}_2 = M_{12} * I_1$$

$$M_{12} = \frac{\mu_0}{4\pi} \oint_{X_1} \oint_{X_2} \frac{d\vec{l}_1 \cdot d\vec{l}_2}{r} \quad \text{(formule de Neumann)}$$

A l'aide de cette formule, on établit le calcul de chaque mutuelle partielle entre les différentes portions des deux circuits de base pour aboutir à la mutuelle inductance globale résultante entre eux. Lorsque les différentielles $d\vec{l}_1$ et $d\vec{l}_2$ sont perpendiculaires, la contribution est nulle.

On crée les segments de transition entre le premier contour $C_1$ et le deuxième contour $C_2$, de sorte que des portions de circuits contribuant à des mutuelles inductances partielles négatives vont compenser une mutuelle inductance positive formée par couplage entre d'autres portions des circuits.

La construction des circuits est réalisée de manière itérative, de manière à obtenir un bilan des mutuelles inductances partielles aboutissant à une mutuelle inductance globale nulle entre les deux circuits.

Sur la figure 1A, un exemple de géométrie d'antenne avec des coordonnées des arêtes des polygones formés par les contours $C_1$ et $C_2$ est donné. Dans cet exemple, les longueurs des éléments conducteurs 102, 106 sont indiquées en cm, la distance d entre les éléments conducteurs prévue pour obtenir une mutuelle inductance globale de l'ordre de 1,48 nH correspondant à un coefficient de couplage de l'ordre de 0,8 % entre les deux circuits, étant de l'ordre de 1.9 cm.

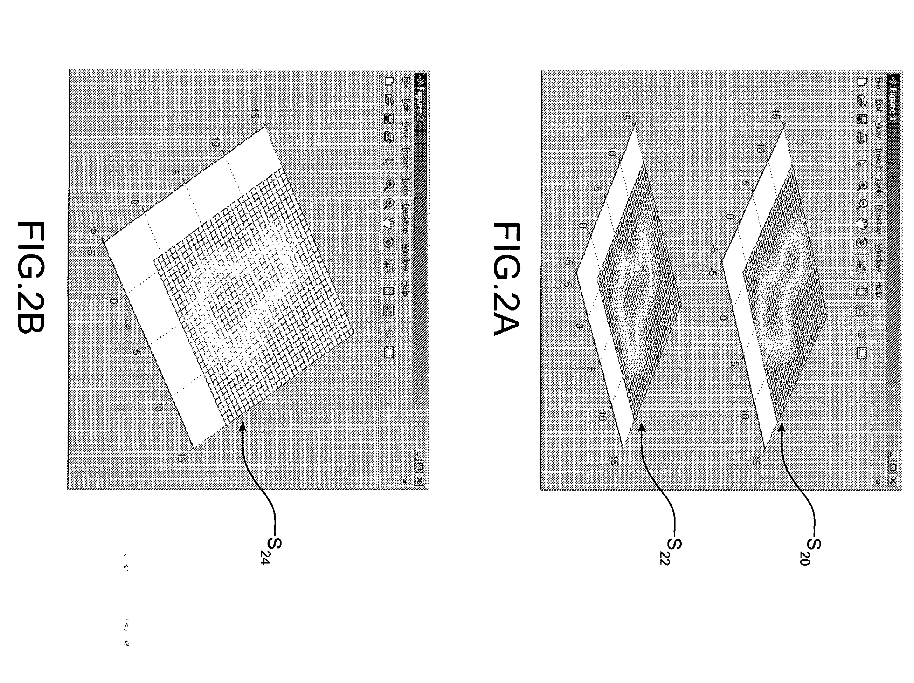

Les figures 2A, 2B, donnent respectivement un exemple de cartographie $S_{20}$ du champ magnétique produit par le premier circuit 104 à une hauteur de 3 cm du plan d'antenne, un exemple de cartographie $S_{22}$ du champ magnétique produit par le deuxième circuit 108 à la hauteur de 3 cm du même plan d'antenne, et un exemple de cartographie $S_{24}$ du champ produit par les deux circuits 104, et 108 à une hauteur de 3 cm du même plan. Pour obtenir ces cartographies, on considère les deux plans contenant les circuits 104 et 108 comme confondus en un même plan d'antenne. Une telle approximation est faite lorsque les deux circuits 104, 108 sont espacés d'une distance de l'ordre de 1 mm et que la mesure est effectuée à une distance de l'ordre de un ou plusieurs centimètres.

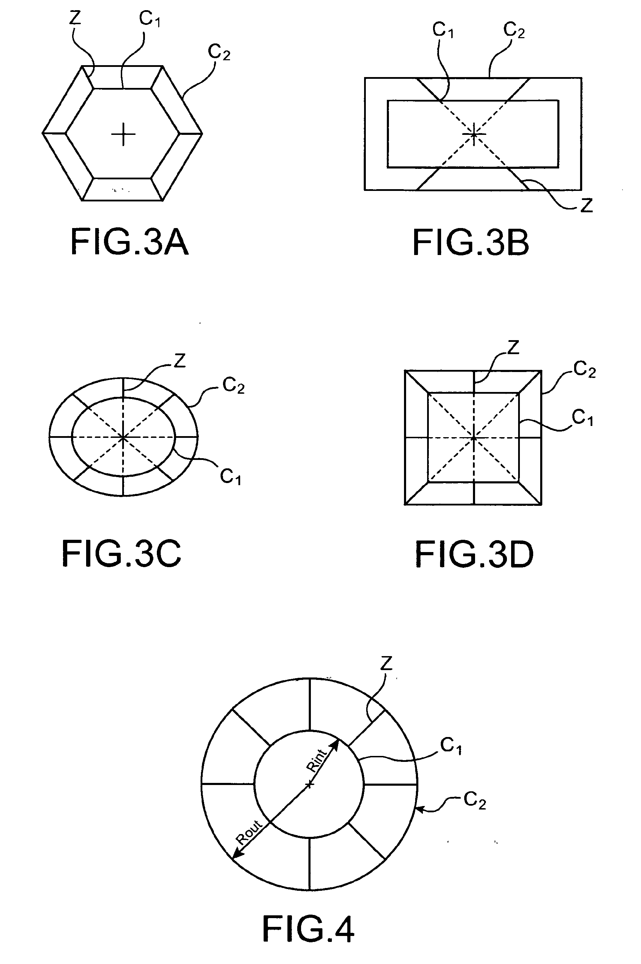

D'autres exemples de géométries d'antennes sont donnés sur les figures 3A-3D.

Sur la figure 3A, les éléments conducteurs de l'antenne sont agencés de sorte que le premier contour $C_1$ et le deuxième contour $C_2$ ont la forme respectivement d'un premier hexagone et d'un deuxième hexagone, des segments Z de transition reliant entre eux les sommets des polygones.

Sur la figure 3B, le premier contour conducteur $C_1$ et le deuxième contour conducteur $C_2$ ont la forme respectivement d'un premier rectangle et d'un deuxième rectangle, des segments Z de transition reliant les deux rectangles. Le deuxième rectangle est une homothétie du premier rectangle. Les segments de transition sont positionnés sur des droites passant par le centre d'homothétie.

Sur la figure 3C, le premier contour conducteur $C_1$ et le deuxième contour conducteur $C_2$ ont la forme respectivement d'une première ellipse et d'une deuxième ellipse, des segments Z de transition reliant les deux ellipses. La deuxième ellipse est une homothétie de la première ellipse. Les segments de transition sont positionnés sur des droites passant par le centre d'homothétie.

Sur la figure 3D, le premier contour conducteur $C_1$ et le deuxième contour conducteur $C_2$ ont la forme respectivement d'un premier carré et d'un deuxième carré, des segments Z de transition reliant les deux carrés. Le deuxième carré est une homothétie du premier carré. Les segments de transition sont positionnés sur des droites passant par le centre d'homothétie.

En augmentant le nombre de segments Z de transition, on augmente la longueur totale des segments participant à l'annulation de la mutuelle, ce qui peut permettre de rapprocher les deux contours C1 et C2 l'un de l'autre afin d'améliorer la distribution du champ et de se rapprocher d'une distribution créée par une boucle simple.

Comme dans l'exemple décrit précédemment en liaison avec les figures 1A-1C, le premier contour C1 et le deuxième contour $C_2$ ainsi que les segments conducteurs Z de transition reliant le premier contour conducteur $C_1$ et le deuxième contour conducteur $C_2$, sont réalisés par projection dans un même plan d'un ensemble d'éléments conducteurs formant un premier circuit et d'un autre ensemble d'éléments conducteur formant un deuxième circuit, les éléments conducteurs étant agencés de manière à obtenir une mutuelle inductance globale nulle entre le premier circuit et le deuxième circuit.

Selon une autre possibilité (figure 4), la géométrie dé l'antenne suivant l'invention, peut être telle que le premier contour $C_1$ a la forme d'un premier cercle selon un premier rayon $R_{int}$, tandis que le deuxième contour $C_2$ a la forme d'un deuxième cercle d'un deuxième rayon $R_{out}$ supérieur à $R_{int}$, le premier cercle et le deuxième cercle étant concentriques et homothétiques. Plusieurs segments Z de transition de même longueur relient le premier cercle et le deuxième cercle, et sont prévus et agencés de manière à conférer une mutuelle inductance globale nulle entre deux circuits construits sur la base des contours $C_1$ et $C_2$ et des segments de transition. Sur l'exemple de la figure 4, la géométrie de l'antenne comporte 8 segments Z de transition entre le premier contour $C_1$ et le deuxième contour $C_2$.

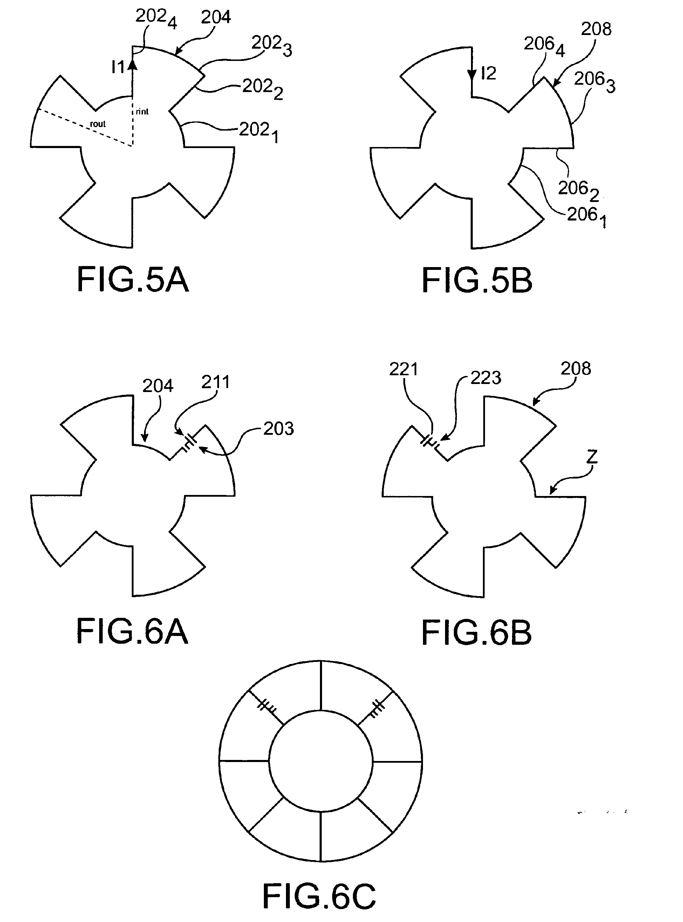

Pour réaliser une telle géométrie, l'antenne peut être formée par exemple d'une part d'un premier circuit 204 situé dans un premier plan et tel qu'illustré sur la figure 5A, et d'autre part d'un deuxième circuit 208 situé par exemple au-dessus du premier plan, dans un deuxième plan et tel qu'illustré sur la figure 5B. Le premier circuit 204 peut être par exemple tel qu'il réalise un motif en forme d'hélice, formé de portions conductrices ou liens conducteurs en arc de cercle selon le premier rayon Rint et de portions conductrices ou liens conducteurs en arc de cercle selon le deuxième rayon Rout, chaque lien conducteur étant respectivement relié à deux liens conducteurs selon le deuxième rayon Rout par l'intermédiaire de deux liens conducteurs.

Le deuxième circuit 208 peut former un motif semblable à celui du premier circuit mais décalé en rotation par rapport à celui du premier circuit 204, lorsque les deux circuits 204 et 208 sont vus dans une direction parallèle à un axe orthogonal au premier plan et au deuxième plan, par exemple à un décalage près de $\Pi/8$.

Le premier circuit 204 comprend une succession de parties conductrices, chaque partie conductrice étant formée d'un premier lien conducteur $202_1$ dont la projection forme une portion du premier contour, d'un deuxième lien conducteur $202_2$ relié au premier lien conducteur $202_1$ et dont la projection forme un segment de transition entre le premier contour et le deuxième contour, d'un troisième lien conducteur $202_3$ dont la projection forme une portion du deuxième contour, et d'un quatrième lien conducteur $202_4$ relié au troisième lien conducteur, et dont la projection forme un segment de transition entre le deuxième contour et le premier contour (figure 5A).

Le deuxième circuit 208 comprend également une succession de parties conductrices, chaque partie conductrice étant formée d'un premier lien conducteur $206_1$ dont la projection forme une portion du premier contour, d'un deuxième lien conducteur $206_2$ relié au premier lien conducteur et dont la projection forme un segment de transition entre le premier contour et le deuxième contour, d'un troisième lien conducteur $206_3$ dont la projection forme une portion du deuxième contour, d'un quatrième lien conducteur $206_4$ relié au troisième lien, et dont la projection forme un segment de transition entre le deuxième contour et le premier contour (figure 5B).

Dans les exemples qui ont été donnés précédemment, les circuits conducteurs sont sous forme de boucles fermées.

Selon un mode de réalisation de la présente invention, on peut prévoir une structure d'antenne à circuits conducteurs ayant un agencement semblable par exemple à l'un ou l'autre des agencements décrits précédemment mais sous forme de boucles dites « quasi-fermées », c'est-à-dire pas totalement fermées mais dans lesquels des liens conducteurs d'accès des circuits conducteurs ou des bornes d'accès des circuits conducteurs, c'est-à-dire des liens ou des bornes prévu(e)s pour amener ou évacuer du courant, sont situés à proximité l'un(e) de l'autre, et placés de sorte qu'ils ne contribuent pas au rayonnement de l'antenne.

Des composants passifs peuvent être ajoutés au premier circuit 204 et/ou au deuxième circuit 208. Ces composants passifs peuvent comprendre par exemple une ou plusieurs résistances et un ou plusieurs condensateurs. Les composants passifs sont prévus dans cet exemple de sorte que les circuits 204 et 208 réalisent respectivement une boucle résonnante.

Pour que les circuits 204, 208 puissent contribuer à des champs coopératifs dans une même zone utile, face à la structure qu'ils forment, des courants $I_1$ et $I_2$ de même sens les parcourent. Les segments 206 de transition sont agencés de manière à permettre de réaliser la condition de mutuelle nulle.

Sur la figure 6A, le premier circuit 204 est doté en outre de composants passifs, par exemple doté de moyens formant un condensateur 211 et de moyens formant une résistance 213, tandis que sur la figure 6B, le deuxième circuit 208 est également doté de composants passifs, par exemple de moyens formant un condensateur 221 et de moyens formant une résistance 223. La figure 6C est quant à elle une représentation d'une superposition ou projection dans un même plan des deux circuits 204, 208, munis d'éléments passifs.

Pour une structure telle qu'illustrée précédemment sur les figures 6A, 6B, 6C, à 8 segments Z de transition, un rayon Rout de contour extérieur par exemple de l'ordre de 8.5 cm, avec un rayon de contour intérieur de Rint de l'ordre de 5,35 cm est nécessaire, tandis qu'avec une structure à 20 segments de transitions, un rayon Rint de l'ordre de 6,13 cm est nécessaire.

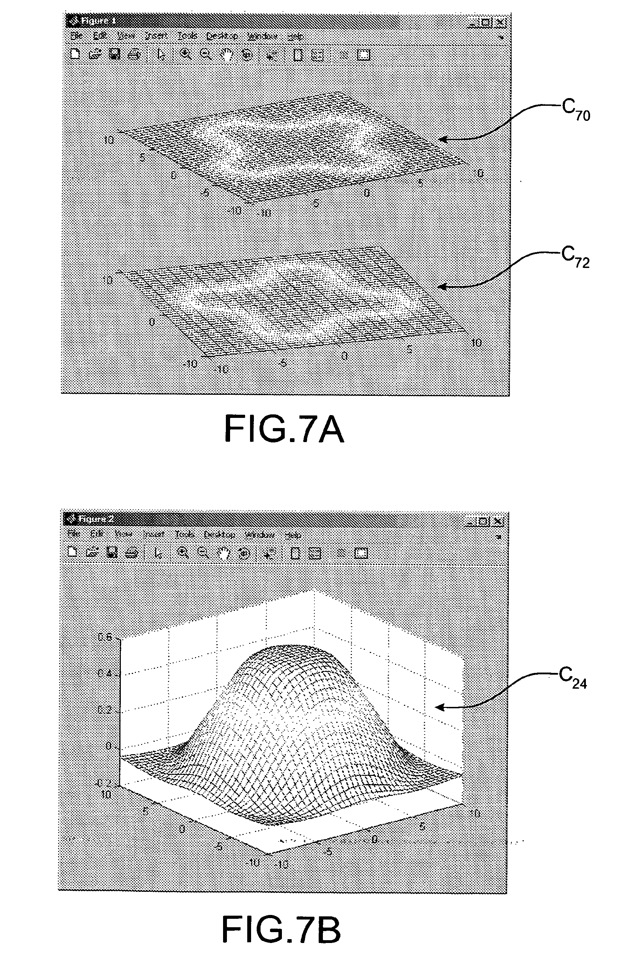

Les figures 7A et 7B donnent un exemple de distribution $C_{70}$ du champ magnétique produit par le premier circuit 204 à une hauteur de 3 cm du plan d'antenne, un exemple de distribution $C_{72}$ du champ magnétique produit par le deuxième circuit 208 à la hauteur de 3 cm, et une distribution $C_{74}$ représentative des champs cumulés produits par les deux circuits 204, 208.

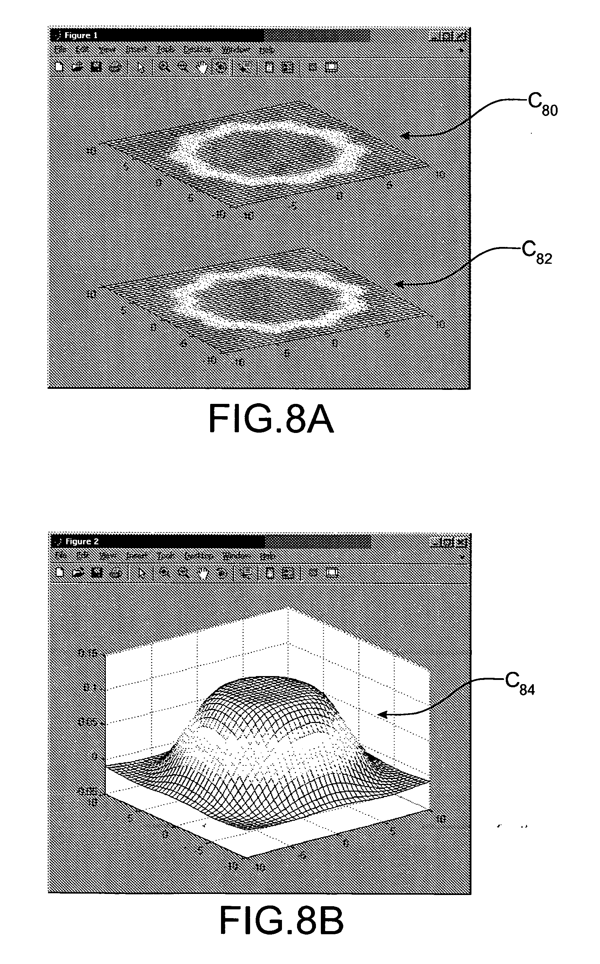

Les figures 8A et 8B donnent un exemple de distribution $C_{80}$, à une hauteur de 3 cm du plan d'antenne, du champ magnétique produit par un circuit d'antenne du type du premier circuit 204 mais comportant 10 pétales, un exemple de distribution $C_{82}$, à la hauteur de 3 cm, du champ magnétique produit par un autre circuit d'antenne tel que le deuxième circuit 208 et une distribution $C_{84}$ représentative d'une superposition du champ produit par ledit circuit et ledit autre circuit.

Pour obtenir ces cartographies, on considère les deux plans contenant les circuits 104 et 108 comme confondus en un même plan d'antenne.

En augmentant le nombre de segments Z de transition par circuit, on obtient, pour ce mode de réalisation, une meilleure conformité du champ magnétique dans la zone utile d'émission de l'antenne.

Dans le cas d'autres formes géométriques de base des contours, par exemple telles qu'illustrées sur les figures 1, 3A-3D, une possibilité d'amélioration de l'uniformité du champ magnétique consiste à augmenter le nombre de segments (référencées Z sur ces figures) de transition entre le premier contour $C_1$ et le deuxième contour $C_2$.

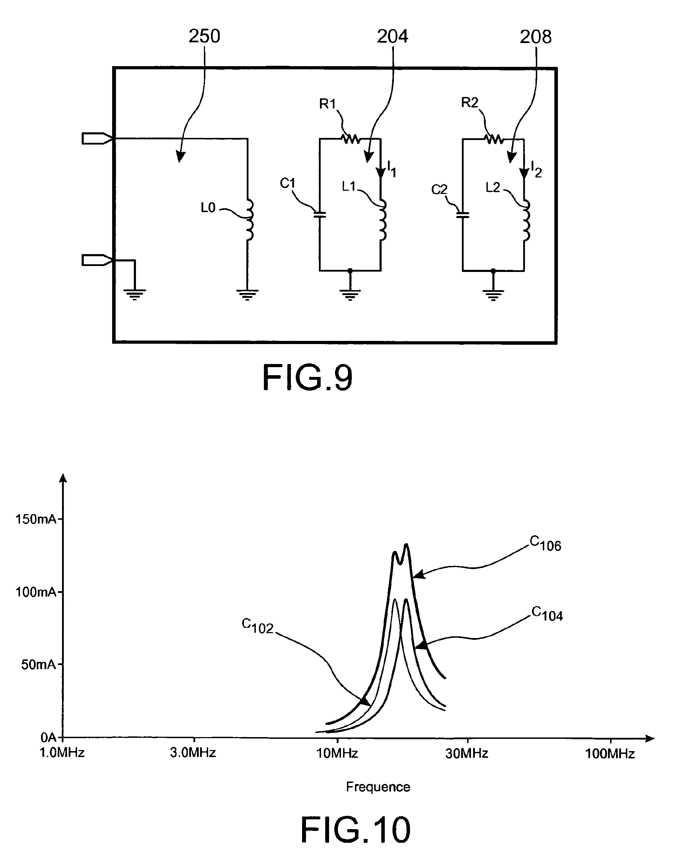

Un schéma électrique équivalent d'un exemple de dispositif d'antenne suivant l'invention, comportant deux circuits tels que décrits précédemment en liaison avec les figures 6A, 6B est donné sur la figure 9.

Le premier circuit 204 forme une première boucle résonante ayant une inductance équivalente $L_1$ par exemple de l'ordre de 0,59 µH, une capacité équivalente C1, par exemple de l'ordre de 255 pF, une résistance équivalente R1 par exemple de l'ordre 2*L1*85.2e6/Q où Q est le facteur de qualité, par exemple de l'ordre de 35.

Le deuxième circuit 208 forme une deuxième boucle résonante ayant une inductance équivalente $L_2$ par exemple de l'ordre de 0,59 µH, une capacité équivalente C2, par exemple de l'ordre de 210 pF, une résistance équivalente R2 par exemple de l'ordre 2*L2*85.2e6/Q où Q est le facteur de qualité, par exemple de l'ordre de 35.

La capacité C1 et la résistance R1 correspondent aux composants passifs insérés dans le premier circuit 204. L'inductance L1 correspond à l'inductance équivalente de l'ensemble des liens conducteurs constitutifs du premier circuit 204. De même, la capacité C2 et la résistance R2 correspondent aux composants passifs insérés dans le deuxième circuit 208. L'inductance L2 correspond à l'inductance équivalente de l'ensemble des liens conducteurs constitutifs du deuxième circuit 208.

Les deux boucles résonantes peuvent être couplées chacune à une boucle d'alimentation 250 comportant des moyens formant un générateur BF comportant une inductance équivalente $L_0$ de l'ordre de 0.55 uH et agencée de manière à assurer un couplage identique pour chacune des deux boucles 204 et 208.

Le coefficient $k_{01}$ de couplage entre la boucle d'alimentation 250 et la première boucle résonante 204 peut être égal au coefficient $k_{02}$ de couplage entre la boucle d'alimentation 250 et la deuxième boucle résonante 208. Les coefficients de couplages $k_{01}$ et $k_{02}$ peuvent être par exemple de l'ordre de 0,175.

Le coefficient de couplage entre les deux boucles résonantes 204 et 208 $k_{12} = M_{12}/\sqrt{(L_1 * L_2)}$ avec $M_{12}$ le coefficient de mutuelle inductance, peut être nul ou au plus tel que $k_{12} \le 0,01$.

Sur la figure 10, des exemples de courbes $C_{102}$, $C_{104}$, $C_{106}$ de réponse en courant en fonction de la fréquence, pour la première boucle résonante 204, la deuxième boucle résonante 208, et l'ensemble des deux boucles 204 et 208 sont données.

Le dispositif suivant l'invention permet d'obtenir une bande passante plus importante que les structures d'antennes classiques tout en gardant un rapport champ émis/puissance équivalent. Même si l'on choisissait la même fréquence comme fréquence de résonance des deux boucles 204 et 208, la bande passante obtenue serait plus importante que celle des structures d'antennes classiques.

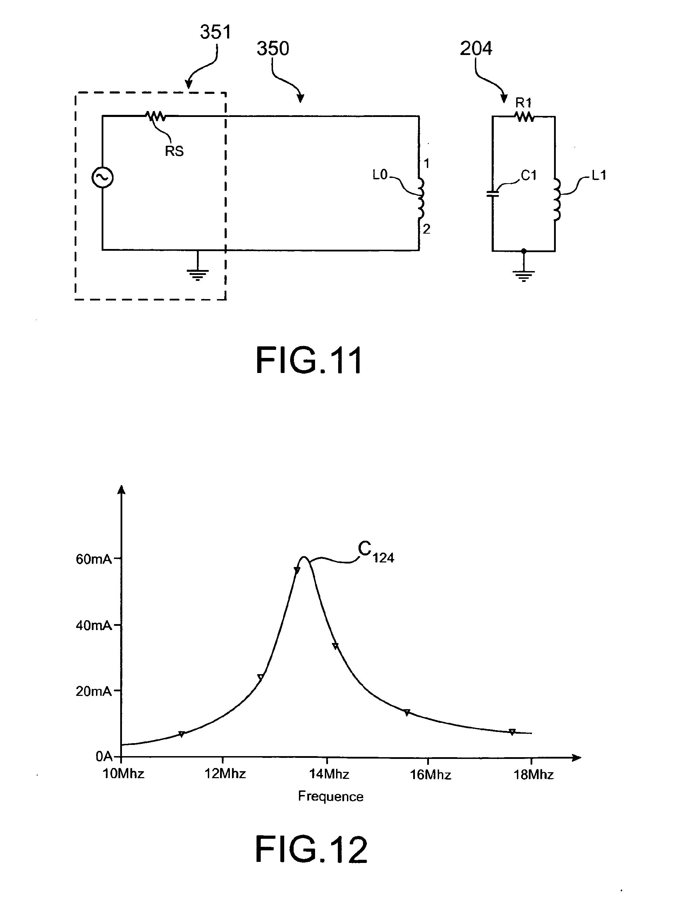

Un schéma électrique équivalent d'un dispositif d'antenne et comportant une boucle d'alimentation 350 couplée à une seule boucle résonante, semblable à la première boucle résonante 202, est donné sur la figure 11.

La boucle d'alimentation 350 est reliée à des moyens 351 formant un générateur BF délivrant une tension $V_1$, en série avec une résistance Rs par exemple de l'ordre de 50 Ω, et une boucle d'inductance $L_0$, par exemple de l'ordre de 0,55 µH étant connectée avec le générateur et la résistance Rs.

Sur la figure 12, la courbe $C_{124}$, de réponse en courant en fonction de la fréquence, de l'inductance équivalente $L_0$ du circuit d'alimentation 350, dé l'inductance équivalente $L_1$ de la première boucle 204, est représentée.

Avec une seule boucle résonante 204, on peut obtenir un courant de l'ordre de 60 mA pour produire le champ magnétique désiré pour une puissance consommée de l'ordre de 5 mW, et une largeur de bande à - 3 dB de l'ordre de 0,76 MHz.

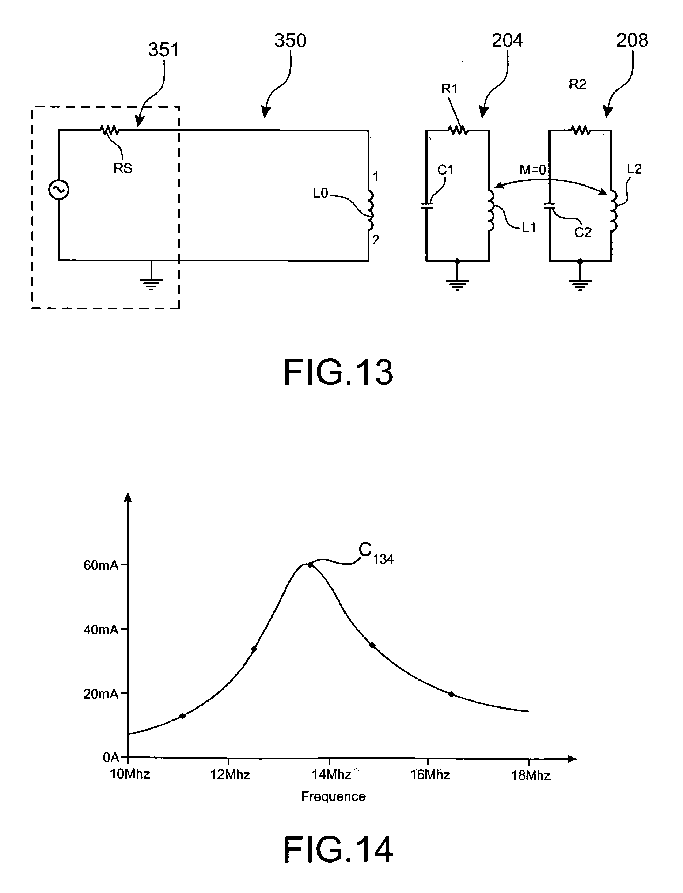

En faisant intervenir les deux boucles 204 et 208 (figures 5A, 5B) comme cela est représenté en figure 13, couplées au circuit d'alimentation 350, et en mutuelle nulle, on peut obtenir un courant de l'ordre 60 mA pour produire le champ magnétique désiré pour une puissance consommée de l'ordre de 5 mW, et une largeur de bande à - 3dB de l'ordre de 1,64 MHz. A l'aide d'une antenne à 2 circuits, on double ainsi la bande passante sans diminuer la puissance émise ni augmenter la puissance consommée.

La figure 14, donne une courbe $C_{134}$, de réponse en courant en fonction de la fréquence, de l'inductance équivalente $L_0$ du circuit d'alimentation 350.

Le dispositif d'antenne suivant ce mode de réalisation de l'invention n'est pas limité à une réalisation à deux circuits résonants ou deux boucles résonantes et peut comporter plus de deux circuits résonants ou boucles résonantes.

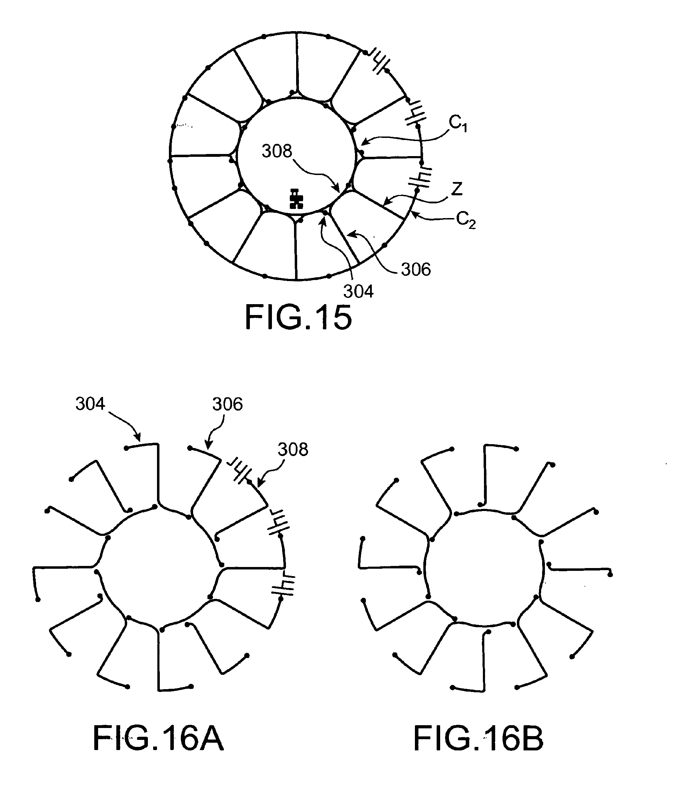

Un autre exemple de dispositif d'antenne à 3 boucles résonantes est donné sur la figure 15. Ce dispositif comporte un ensemble de liens conducteurs répartis dans deux plans, et agencés de sorte qu'une projection des liens conducteurs dans un même plan ait la forme d'au moins un premier contour conducteur $C_1$ suivant une première forme circulaire, et d'au moins un deuxième contour conducteur $C_2$ situé à l'intérieur du premier contour et suivant une deuxième forme circulaire, homothétique de ladite première forme circulaire, et d'une pluralité de segments Z de transition reliant le premier contour $C_1$ et le deuxième contour $C_2$.

Dans cet exemple, un premier circuit 304, un deuxième circuit 306, et un troisième circuit 308 sont chacun formés d'une pluralité de liens conducteurs situés dans un premier plan d'une pluralité de liens conducteurs, situés dans un deuxième plan, et d'une pluralité de liens conducteurs (non représentés), par exemple sous forme de vias ou d'éléments conducteurs traversant, connectant des liens du premier plan et du deuxième plan.

Les liens conducteurs situés dans le premier plan sont illustrés sur une figure 16A, tandis que les liens conducteurs situés dans le deuxième plan sont illustrés sur une figure 16B.

Une superposition ou une projection du premier circuit 304, du deuxième circuit 306, du troisième circuit 308 dans un même plan, par exemple parallèle au premier plan et au deuxième plan, forme le premier contour conducteur $C_1$, le deuxième contour conducteur $C_2$ et les segments Z reliant le premier contour et le deuxième contour. Les circuits 304, 306, 308 sont agencés de manière à avoir un coefficient de couplage sensiblement nul, ou au moins inférieur à 5 %, avantageusement inférieur à 1 %.

Une antenne inductive suivant l'invention peut être utilisée dans des applications d'échanges de données sans contact, en particulier pour des applications où il est besoin d'une transmission d'information à très haut débit, par exemple de l'ordre ou supérieur à 1 Mbit/s, par exemple dans des applications où des fichiers de tailles importantes sont échangés, tels que des fichiers d'images, des fichiers de données cryptées, des données biométriques.

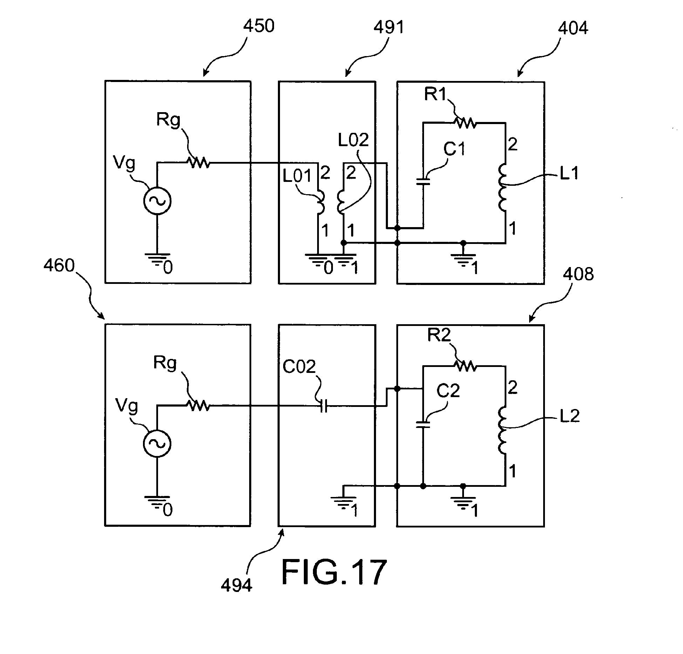

D'autres exemples de réalisation de dispositif selon l'invention sont décrits ci-après en relation avec les figures 17 à 25. Chaque circuit formant la ou des antennes est dans ces exemples représenté par un circuit équivalent R, L, C en série correspondant par exemple à la structure représentée en figures 6A, 6B. Les résistances R et C sont celles de composants passifs insérés dans le circuit. L'inductance L correspond à l'inductance des liens conducteurs formant le circuit.

Dans tous ces exemples, les circuits conducteurs sont des boucles quasi-fermées de liens conducteurs, les deux extrémités d'une boucle formant ses bornes d'accès. Ces bornes d'accès sont reliées à un circuit d'alimentation ou de lecture comme cela est précisé ci-après.

Un autre exemple de schéma électrique équivalent d'un dispositif formant au moins une structure d'antenne suivant l'invention, comportant deux circuits conducteurs indépendants ou distincts est donné sur la figure 17.

Un premier circuit conducteur 404 forme une première boucle résonante qui comporte une inductance $L_1$, une capacité $C_1$, une résistance $R_1$. Ce premier circuit 404 peut avoir par exemple un agencement du type du circuit 204 de la figure 6A avec des composants passifs $R_1$ et $C_1$ rajoutés.

De même, un deuxième circuit conducteur 408 forme une deuxième boucle résonante ayant une inductance $L_2$ une capacité $C_2$, une résistance $R_2$.

Le premier circuit 404 est relié à un générateur 450 par l'intermédiaire d'un bloc de raccordement 491. Le bloc de raccordement 491 est dans cet exemple un transformateur comprenant une inductance primaire L01 reliée au générateur et une inductance secondaire L02 connectée aux bornes d'accès du premier circuit 404.

Le deuxième circuit 408 est relié à un autre générateur 460 par l'intermédiaire d'un bloc de raccordement 494 comportant une capacité CO2. La capacité CO2 est connectée d'une part au générateur 460 et d'autre part à une première électrode de la capacité $C_2$ du deuxième circuit 408 par l'intermédiaire d'une première borne d'accès du circuit 408. La seconde électrode de la capacité $C_2$ est reliée à la masse présente dans le circuit de raccordement par l'intermédiaire d'une seconde borne d'accès du circuit 408.

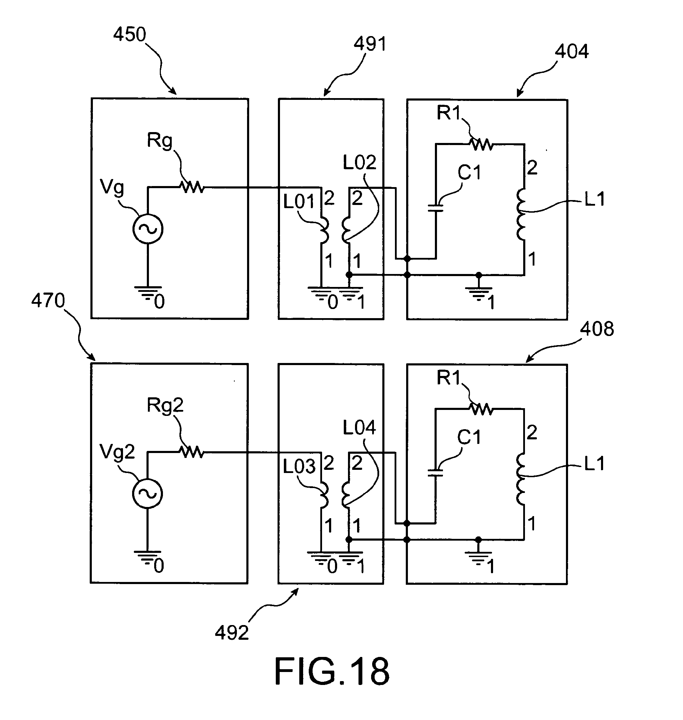

Une variante de l'exemple précédent, est représentée sur la figure 18. Un premier circuit 404 est comme précédemment relié à un générateur 450 par l'intermédiaire d'un bloc de raccordement de type transformateur 491. Un deuxième circuit 408 est quant à lui relié à un générateur 470 par l'intermédiaire d'un bloc de raccordement 492 de type transformateur de structure identique à celle du bloc de raccordement 491 et comprend une inductance primaire L03 reliée au générateur 470 et une inductance secondaire L04 reliée aux bornes d'accès du deuxième circuit 408.

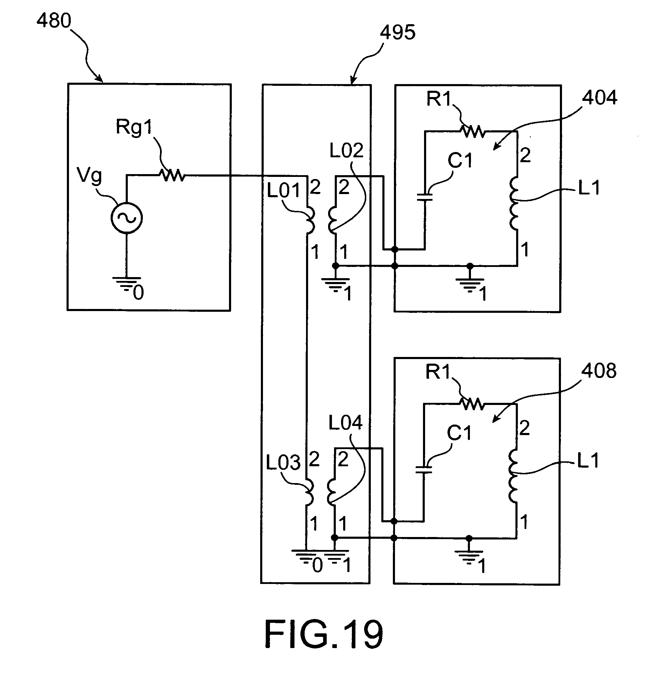

Dans une variante du dispositif susmentionné représentée en figure 19, le dispositif comprend un unique générateur 480 et un bloc de raccordement « commun » 495 reliant ce générateur 480 au premier circuit conducteur 404 et au deuxième circuit conducteur 408 au moyen d'un transformateur comprenant deux enroulement primaires L01 et L03 en série reliés au générateur et deux enroulement secondaires L02 et L04 reliés respectivement au premier circuit 404 et au deuxième circuit 408.

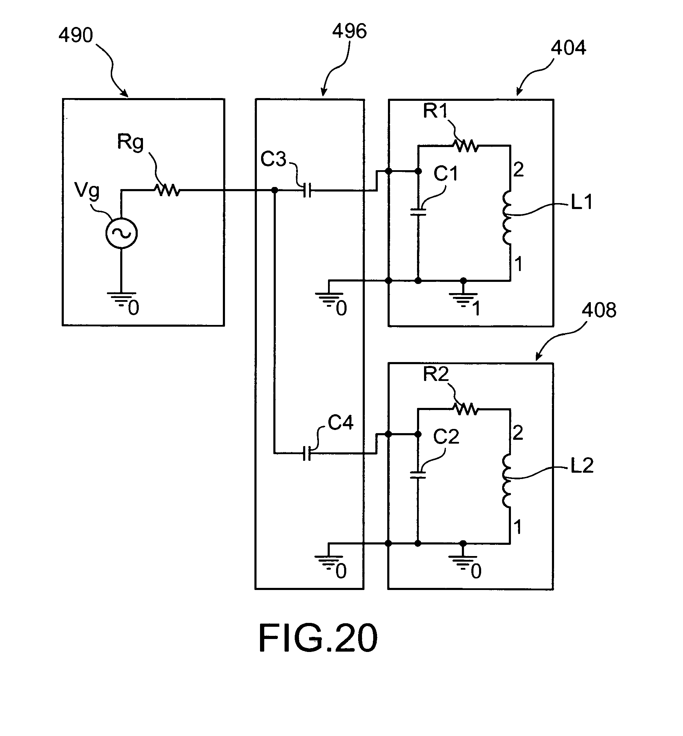

Dans une autre variante des dispositifs précédents représentés en figure 20, le dispositif comprend un unique générateur 490 et un unique bloc de raccordement commun 496 de type capacitif reliant ce générateur 490 à un premier circuit 404 et un deuxième circuit 408. Le bloc de raccordement comprend une première capacité C3 connectée à une première électrode de la capacité C1 du premier circuit 404, via une borne d'accès du premier circuit, et une autre capacité C4 connectée à une première électrode de la capacité C2 du deuxième circuit 404, via une borne d'accès du deuxième circuit. Les secondes électrodes des capacités C1 et C2 des premiers et deuxièmes circuits sont reliées à la masse via une borne d'accès de chaque circuit.

Dans les exemples susmentionnés, le premier circuit conducteur et le deuxième circuit conducteur permettent une émission de signaux électromagnétiques, via la structure d'antenne correspondant aux inductances L1 et L2, dans la mesure où ils sont reliés à un générateur. Les deux circuits 404 et 408 peuvent être utilisés pour émettre des signaux, notamment dans le cas où l'on souhaite émettre sur une large bande passante.

Selon une variante d'utilisation des circuits susmentionnés, le premier circuit conducteur peut être utilisé comme antenne d'une émission de signaux électromagnétiques, et le deuxième circuit conducteur utilisé comme antenne de réception de signaux. Les voies d'émission et de réception peuvent comprendre des blocs en commun, par exemple un bloc de raccordement de type transformateur, ou être dissociées comme dans l'exemple ci-après.

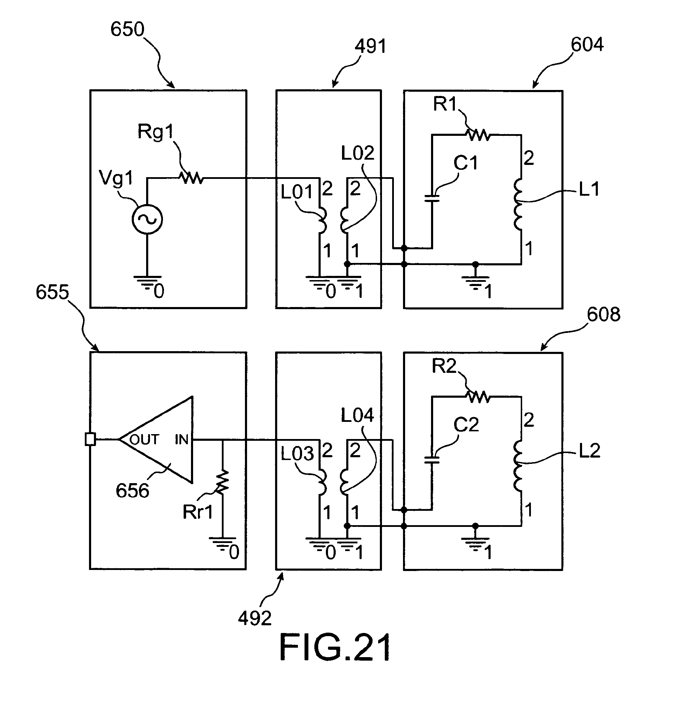

Le dispositif de la figure 21 illustre un dispositif comprenant des voies d'émission et de réception distinctes. Un premier circuit 604, et un deuxième circuit 608, ayant un agencement qui peut être par exemple du type de celui donné sur les figures 6A-6B, sont reliés respectivement à un générateur 650 par l'intermédiaire d'un premier bloc de raccordement de type transformateur 491, et à un étage de réception 655 par l'intermédiaire d'un deuxième bloc de raccordement de type transformateur 493. L'étage 655 de réception peut comprendre notamment des moyens formant un amplificateur 656.

Dans cet exemple, les premier et second circuits du dispositif constituent l'équivalent de deux antennes dans la mesure où leur fonction est différente, émettre ou recevoir des signaux électromagnétiques.

Selon un mode de réalisation d'un dispositif selon l'invention, notamment dans le cas d'une application de type RFID, un même ensemble de circuits conducteurs peut-être utilisé pour recevoir et émettre des signaux. Le ou les blocs de raccordement à ces circuits seront reliés d'une part à des moyens de réception et d'autre part à des moyens d'émission, des composants électroniques pouvant être communs aux moyens d'émission et de réception.

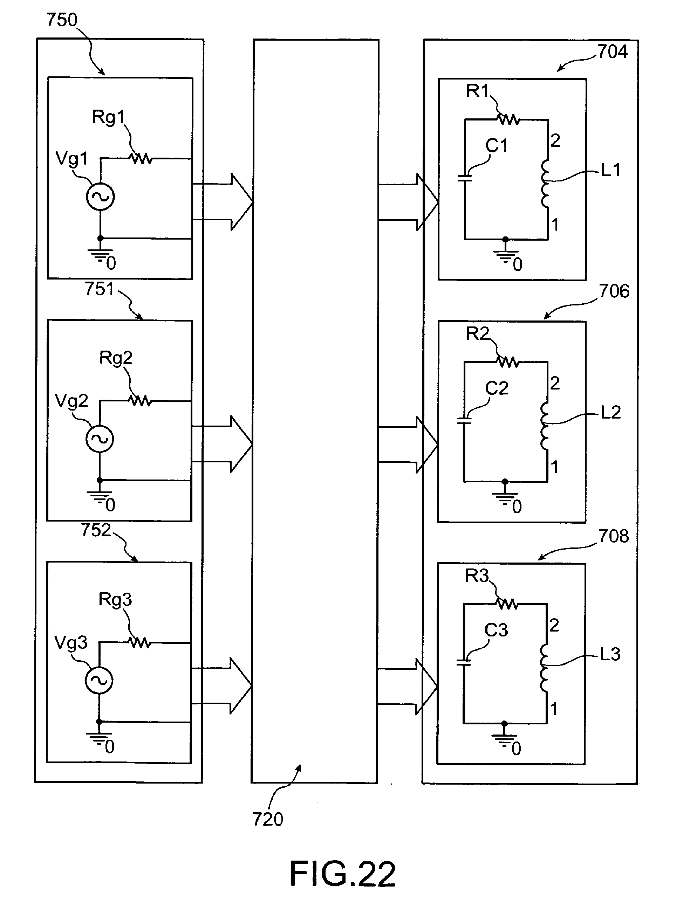

Sur la figure 22, un autre exemple de dispositif est donné. Ce dispositif comprend 3 générateurs 750, 751, 752, ainsi que 3 circuits 704, 706, 708 susceptibles de former des boucles résonantes.

Les circuits 704, 706, 708, peuvent avoir un agencement tel que celui des circuits 304, 306, 308 décrits en liaison par exemple en liaison avec les figures 16A-16B.

Le premier circuit 704 a une inductance $L_1$ une capacité équivalente $C_1$, une résistance équivalente $R_1$, et une capacité C1, tandis que le deuxième circuit 706 a une inductance L2, une résistance équivalente $R_2$, et une capacité C2, et que le troisième circuit 708 a une inductance L3, une résistance équivalente $R_3$, et une capacité C3.

La connexion entre d'une part le premier circuit 704, le deuxième circuit 706, et le troisième circuit 708, et d'autre part les générateurs 750, 751, 752, est effectuée par l'intermédiaire d'un bloc de raccordement 720.

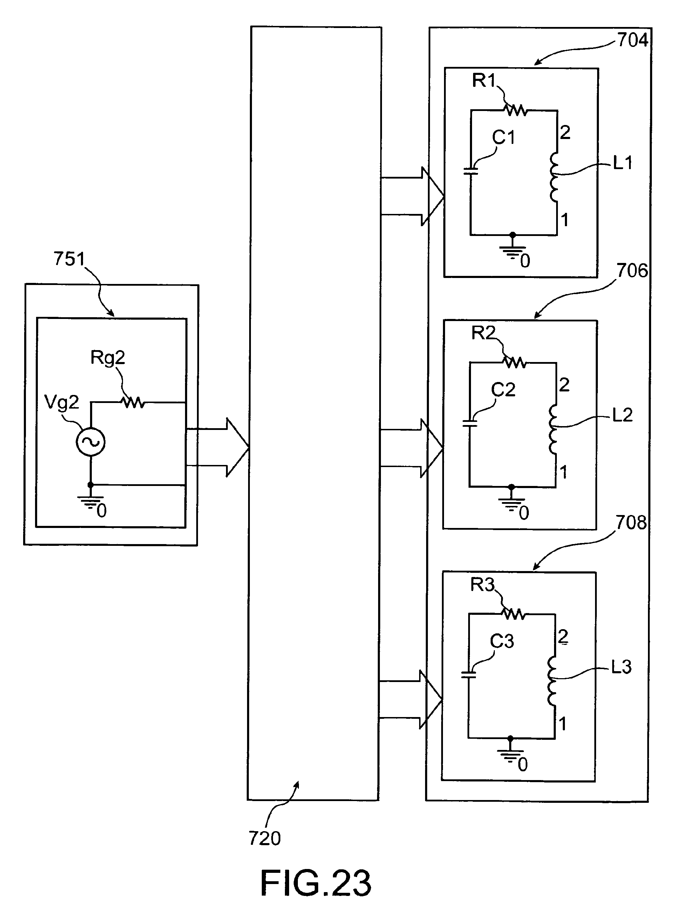

Une variante de l'exemple précédemment décrit, est donnée sur la figure 23. Pour cette variante, un seul circuit générateur 750 est connecté aux trois circuits 704, 706, 708 par l'intermédiaire du bloc de raccordement 720.

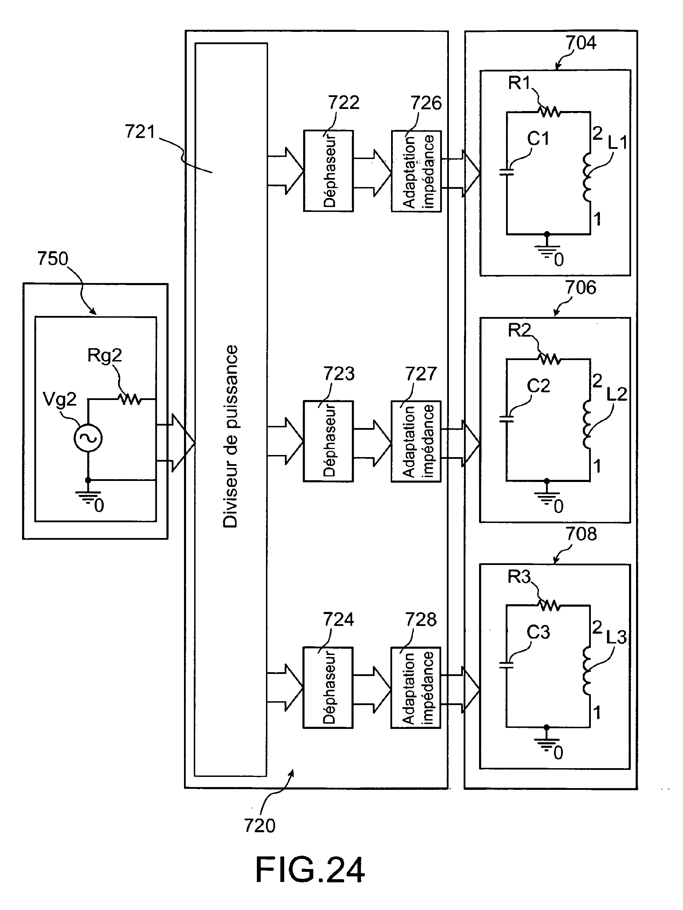

Sur la figure 24, un exemple de mise en oeuvre du bloc de raccordement 720 est donné.

Dans cet exemple, le bloc de raccordement 720 comprend, en entrée, un module diviseur de puissance 721 qui peut être réalisé par exemple à l'aide de composants passifs.

Le module diviseur de puissance 721 est connecté à des modules déphaseurs, par exemple à 3 modules déphaseurs 722, 723, 724, qui peuvent être réalisés par exemple à l'aide de lignes à retard ou par exemple par des lignes d'impédances caractéristiques respectives choisies et dont les longueurs respectives dépendent du déphasage désiré.

Les modules déphaseurs 722, 723, 724 peuvent être connectés respectivement à des modules d'adaptation d'impédance 726, 727, 728, qui peuvent être réalisés par exemple à l'aide de transformateurs tels que des transformateurs à noyau de ferrite. Les modules d'adaptation d'impédance 726, 727, 728, peuvent être prévus en sortie du bloc de raccordement et être connectés respectivement aux circuits 704, 706, 708.

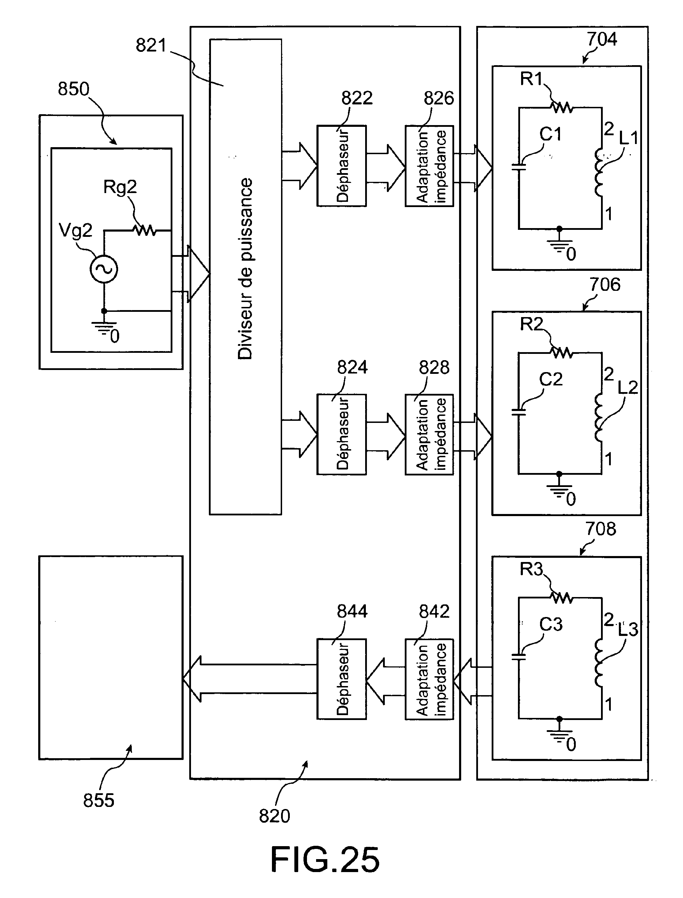

Une variante (figure 25) de l'exemple précédemment décrit, prévoit un premier circuit 704 résonant et un deuxième circuit 706 résonant, qui sont dédiés à une émission de signaux, et un troisième circuit 708 résonant, qui est dédié à une réception de signaux.

Les circuits résonants 704, 706, 708 peuvent avoir un agencement par exemple tel que celui des circuits 304, 306, 308 décrits en liaison en liaison avec les figures 16A-16B.

Les circuits résonants 704, 706, 708 sont connectés à un générateur 850. Le circuit 708 est quant à lui connecté à un étage de réception 855. Un bloc 820 de raccordement peut être prévu d'une part entre le circuit d'alimentation 850 et les circuits 704, 706 résonants, et d'autre part entre l'étage récepteur 855 et le circuit résonant 708.

Le bloc de raccordement 820 comprend, en entrée, un module diviseur de puissance 821 auquel est connecté générateur 850. Des modules déphaseurs peuvent être prévus en sortie du diviseur de puissance 821 par exemple deux modules déphaseurs 822, 824 prévus respectivement pour les circuits 704 et 706.

Les modules déphaseurs 822, 824 peuvent être connectés respectivement à des modules d'adaptation d'impédance 826, 828.

Le bloc de raccordement 820 peut également comprendre un module d'adaptation d'impédance 842, ainsi que des moyens formant un filtre 844, entre le circuit 708 résonant qui est dédié à la réception de signaux et l'étage 855 de réception.

Un dispositif de transmission et en particulier une structure d'antenne telle que décrite précédemment dans l'un ou l'autre des modes de réalisation décrits précédemment, peut être intégrée à un système de communication sécurisée tel que décrit dans la demande de brevet : « système de communication sécurisée entre un lecteur de carte sans contact et une carte » déposée en France par la demanderesse, et dont le numéro d'enregistrement national est 07/02227.

## Revendications

1. Dispositif de transmission de signaux, par couplage inductif sans contact comportant au moins une structure d'antenne formant une ou plusieurs antennes, ladite structure comprenant au moins des première et deuxième pluralités de liens conducteurs (102, 106), chaque pluralité de liens conducteurs formant un circuit conducteur (104, 204, 304, 404, 504, 604, 704 ; 108, 208, 308, 408, 508, 608, 708) par lequel un courant ($I_1$ ; $I_2$) est destiné à circuler, lesdits liens conducteurs étant distribués dans au moins 2 plans parallèles distincts, les circuits conducteurs étant distincts et non reliés entre eux au sein de ladite structure d'antenne de sorte que les courants circulant dans chaque circuit conducteur peuvent être différents, l'ensemble desdits liens conducteurs étant agencés de sorte qu'une projection dans un même plan des liens conducteurs a la forme d'un premier contour ($C_1$) suivant une première forme, d'un deuxième contour ($C_2$) situé à l'intérieur du premier contour et suivant une deuxième forme, homothétique de ladite première forme, et d'une pluralité de segments reliant le premier contour et le deuxième contour.

2. Dispositif selon la revendication 1, chaque circuit conducteur comprenant une succession de parties conductrices, chaque partie conductrice étant formée :

    - d'un premier lien conducteur ($102_1$, $106_1$ ; $202_1$, $206_1$) dont la projection forme une portion dudit premier contour ($C_1$),
    - d'un deuxième lien conducteur ($102_2$, $106_2$ ; $202_2$, $206_2$) dont la projection forme un segment de transition entre le premier contour et le deuxième contour,
    - d'un troisième lien conducteur ($102_3$, $106_3$ ; $202_3$, $206_3$) dont la projection forme une portion du deuxième contour
    - d' un quatrième lien conducteur ($102_4$, $106_4$ ; $202_4$, $206_4$) dont la projection forme un segment de transition entre le deuxième contour et le premier contour.

3. Dispositif selon les revendications 1 ou 2, lesdits liens conducteurs étant agencés de sorte que lesdits circuits ont, deux à deux, un coefficient de couplage nul ou au moins inférieur à 5 % ou à 1 %.

4. Dispositif selon l'une des revendications 1 à 3, dans lequel chaque circuit (104, 108, 204, 208) est agencé de manière à former une boucle résonante.

5. Dispositif selon l'une des revendications 1 à 4, lesdits segments reliant le premier contour et le deuxième contour étant situés sur des droites passant par le centre d'homothétie desdits contours.

**6.** Dispositif selon l'une des revendications 1 à 5, dans lequel ladite première forme et ladite deuxième forme sont polygonales, ou circulaires, ou elliptiques.

**7.** Dispositif selon l'une des revendications 1 à 6, dans lequel au moins un desdits circuits conducteurs comporte un ou plusieurs composants passifs.

**8.** Dispositif selon l'une des revendications 1 à 7, ladite structure comprenant trois pluralités de liens conducteurs formant trois circuits conducteurs distincts (304, 306, 308).

**9.** Dispositif selon l'une des revendications 1 à 8, chaque circuit étant relié ou couplé ou connecté à un générateur.

**10.** Dispositif selon l'une des revendications 1 à 9, dans lequel au moins un desdits circuits conducteurs est relié à un générateur, et au moins un autre desdits circuits est relié à un étage de réception de signaux.

**11.** Dispositif selon l'une des revendications 1 à 10, dans lequel un ou plusieurs desdits circuits conducteurs sont reliés à un ou plusieurs générateurs, le dispositif comprenant au moins un bloc de raccordement entre lesdits circuits conducteurs et lesdits générateurs, le bloc de raccordement comprenant au moins un module diviseur de puissance, et/ou au moins un module déphaseur, et/ou au moins un module d'adaptation d'impédance.

**12.** Dispositif selon l'une des revendications 1 à 11, dans lequel un ou plusieurs desdits circuits sont reliés à un ou plusieurs étages de réception de signaux, le dispositif comprenant au moins un bloc de raccordement entre lesdits circuits conducteurs et lesdits étages de réception, le bloc de raccordement comprenant au moins des moyens de filtrage et/ou au moins un module d'adaptation d'impédance.

**13.** Dispositif de communication par couplage inductif ou sans contact entre un lecteur et au moins un objet mobile, en particulier une carte sans contact ou une étiquette, comportant un dispositif de transmission de signaux selon l'une des revendications 1 à 12.

## Claims

**1.** Device for transmission of signals by contactless inductive coupling comprising at least one antenna structure forming one or several antennas, said structure comprising at least first and second pluralities of conducting links (102, 106), each plurality of conducting links forming a conducting circuit (104, 204, 304, 404, 504, 604, 704; 108, 208, 308, 408, 508, 608, 708) through which a current ($I_1$ ; $I_2$) will circulate, wherein:

said conducting links are distributed over at least two distinct parallel planes,
the conducting circuits being distinct and not linked together within said antenna structure so that the currents circulating in each conducting circuit may be different,
the set of said conducting links being arranged such that there is a projection of the conducting links in the form of a first contour ($C_1$) with a first shape, a second contour ($C_2$) located inside the first contour and in the same plane and with a second shape, homothetic with said first shape, and a plurality of segments connecting the first contour and the second contour.

**2.** Device according to one of claim 1, each conducting circuit comprising a sequence of conducting parts, each conducting part being formed from:

- a first conducting link ($102_1$, $106_1$ ; $202_1$, $206_1$) the projection of which forms a portion of said first contour ($C_1$),
- a second conducting link ($102_2$, $106_2$ ; $202_2$, $206_2$) the projection of which forms a transition segment between the first contour and the second contour,
- a third conducting link ($102_3$, $106_3$ ; $202_3$, $206_3$) the projection of which forms a portion of the second contour,
- a fourth conducting link ($102_4$, $106_4$ ; $202_4$, $206_4$) the projection of which forms a transition segment between the second contour and the first contour.

**3.** Device according to one of claim 1 or 2, said conducting links being arranged such that the coefficient coupling between pairs of said circuits is zero or at least less than 5% or less than 1%.

**4.** Device according to one of claims 1 to 3, in which each circuit (104, 108, 204, 208) is arranged so as to form a

resonant loop.

5. Device according to one of claims 1 to 4, said segments connecting the first contour and the second contour being located on straight lines passing through the homothetic centre of said contours.

6. Device according to one of claims 1 to 5, in which said first shape and said second shape are polygonal, or circular or elliptical.

7. Device according to one of claims 1 to 6, in which at least one of said conducting circuits comprises one or several passive components.

8. Device according to one of claims 1 to 7, said structure comprising three pluralities of conducting links forming three distinct conducting circuits (304, 306, 308).

9. Device according to one of claims 1 to 8, each circuit being coupled or connected to a generator.

10. Device according to one of claims 1 to 9, in which at least one of said conducting circuits is connected to a generator, and at least one other of said circuits is connected to a signal reception stage.

11. Device according to one of claims 1 to 10, in which one or several of said conducting circuits are connected to one or several generators, the device comprising at least one connection block between said conducting circuits and said generators, the connection block comprising at least one power divider module, and/or at least one phase shift module, and/or at least one impedance matching module.

12. Device according to one of claims 1 to 11, in which one or several of said circuits (are) connected to one or several signal reception stages, the device comprising at least one connection block between said conducting circuits and said reception stages, the connection block comprising at least filter means and/or at least one impedance matching module.

13. Inductive coupling or contactless communication device between a reader and at least a mobile object, in particular a contactless card or a tag, comprising a signal transmission device according to one of claims 1 to 12.

**Patentansprüche**

1. Vorrichtung zur Übertragung von Signalen durch kontaktlose induktive Kopplung, umfassend wenigstens eine Antennenstruktur, die eine oder mehrere Antennen bildet, wobei die Struktur wenigstens eine erste und eine zweite Mehrzahl von leitenden Verbindungen (102, 106) umfasst, wobei jede Mehrzahl von leitenden Verbindungen einen leitenden Kreis (104, 204, 304, 404, 504, 604, 704; 108, 208, 308, 408, 508, 608, 708) bildet, durch den ein Strom ($I_1$ ; $I_2$) fließen soll,
wobei die leitenden Verbindungen in wenigstens zwei getrennten parallelen Ebenen verteilt sind,
wobei die leitenden Kreise getrennt und in der Antennenstruktur nicht miteinander verbunden sind, so dass die Ströme, die in jedem leitenden Kreis fließen, verschieden sein können,
wobei die Gesamtheit der leitenden Verbindungen derart angeordnet ist, dass eine Projektion der leitenden Verbindungen in ein und dieselbe Ebene die Form einer ersten Kontur ($C_1$) gemäß einer ersten Form, einer zweiten Kontur ($C_2$), die innerhalb der ersten Kontur liegt und gemäß einer zweiten Form, die zur ersten Form homothetisch ist, und einer Mehrzahl von Segmenten hat, die die erste Kontur und die zweite Kontur verbinden.

2. Vorrichtung nach Anspruch 1, wobei jeder leitende Kreis eine Abfolge von leitenden Teilen umfasst, wobei jedes leitende Teil gebildet ist aus:

- einer ersten leitenden Verbindung ($102_1$, $106_1$; $202_1$, $206_1$), deren Projektion einen Abschnitt der ersten Kontur ($C_1$) bildet,
- einer zweiten leitenden Verbindung ($102_2$, $106_2$; $202_2$, $206_2$), deren Projektion ein libergangssegment zwischen der ersten Kontur und der zweiten Kontur bildet,
- einer dritten leitenden Verbindung ($102_3$, $106_3$; $202_3$, $206_3$), deren Projektion einen Abschnitt der zweiten Kontur bildet,
- einer vierten leitenden Verbindung ($102_4$, $106_4$; $202_4$, $206_4$), deren Projektion ein Übergangssegment zwischen der zweiten Kontur und der ersten Kontur bildet.

3. Vorrichtung nach den Ansprüchen 1 oder 2, wobei die leitenden Verbindungen dazu ausgelegt sind, dass die Kreise paarweise einen Kopplungskoeffizienten von Null oder zumindest kleiner als 5% oder kleiner als 1% haben.

4. Vorrichtung nach einem der Ansprüche 1 bis 3, bei der jeder Kreis (104, 108, 204, 208) dazu ausgelegt ist, eine Resonanzschleife zu bilden.

5. Vorrichtung nach einem der Ansprüche 1 bis 4, wobei die Segmente, die die erste Kontur und die zweite Kontur miteinander verbinden, auf Geraden angeordnet sind, die durch das Homothetiezentrum der Konturen verlaufen.

6. Vorrichtung nach einem der Ansprüche 1 bis 5, bei der die erste Form und die zweite Form polygonal, kreisförmig oder elliptisch sind.

7. Vorrichtung nach einem der Ansprüche 1 bis 6, bei der wenigstens einer der leitenden Kreise eine oder mehrere passive Komponenten umfasst.

8. Vorrichtung nach einem der Ansprüche 1 bis 7, wobei die Struktur drei Mehrzahlen von leitenden Verbindungen umfasst, die drei getrennte leitende Kreise (304, 306, 308) bilden.

9. Vorrichtung nach einem der Ansprüche 1 bis 8, wobei jeder Kreis mit einem Generator verbunden oder gekoppelt oder daran angeschlossen ist.

10. Vorrichtung nach einem der Ansprüche 1 bis 9, bei der wenigstens einer der leitenden Kreise mit einem Generator verbunden ist, und wenigstens ein anderer der Kreise mit einer Signalempfangsstufe verbunden ist.

11. Vorrichtung nach einem der Ansprüche 1 bis 10, bei der einer oder mehrere der leitenden Kreise mit einem oder mehreren Generatoren verbunden sind, wobei die Vorrichtung wenigstens einen Anschlussblock zwischen den leitenden Kreisen und den Generatoren umfasst, wobei der Anschlussblock wenigstens ein Leistungsteilermodul und/oder wenigstens ein Phasenschiebermodul und/oder wenigstens ein Impedanzanpassungsmodul umfasst.

12. Vorrichtung nach einem der Ansprüche 1 bis 11, bei der einer oder mehrere der Kreise mit einer oder mehreren Signalempfangsstufen verbunden ist/sind, wobei die Vorrichtung wenigstens einen Anschlussblock zwischen den leitenden Kreisen und den Empfangsstufen umfasst, wobei der Anschlussblock wenigstens eine Filtereinrichtung und/oder wenigstens ein Impedanzanpassungsmodul umfasst.

13. Vorrichtung zur Kommunikation mittels induktiver oder kontaktloser Kopplung zwischen einem Leser und wenigstens einem mobilen Objekt, insbesondere eine kontaktlose Karte oder ein Etikett, umfassend eine Vorrichtung zur Übertragung von Signalen nach einem der Ansprüche 1 bis 12.

FIG. 1A

FIG. 1B

FIG. 1C

FIG.2A

FIG.2B

FIG.3A

FIG.3B

FIG.3C

FIG.3D

FIG.4

FIG.5A

FIG.5B

FIG.6A

FIG.6B

FIG.6C

FIG.7A

FIG.7B

FIG.8A

FIG.8B

FIG.9

Frequence

FIG.10

FIG.11

FIG.12

FIG.13

FIG.14

FIG.15

FIG.16A

FIG.16B

FIG.17

FIG.18

FIG.19

FIG.20

FIG.21

FIG.22

FIG.23

FIG.24

FIG.25

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5691731 A